# EUROPEAN PATENT SPECIFICATION

(11) **EP 2 398 239 B1**
(45) Date of publication and mention of the grant of the patent: **06.01.2016**
(21) Application number: 11005012.7
(22) Date of filing: 20.06.2011
(51) Int. Cl.: H04N 7/24, H04N 21/2381, H04N 21/234, H04N 21/44, H04N 21/81, H04N 21/845, H04N 21/858

(54) **Frame accurate content insertion system**
Rastergenaues Inhaltseinfügesystem
Système d'insertion de contenu à précision de trame

(30) Priority: 21.06.2010 US 356965 P
(43) Date of publication of application: 21.12.2011
(73) Proprietor: Accenture Global Services Limited, Dublin 4 (IE)
(72) Inventor: Lemire, Christopher M., Flemington New Jersey 08822 (US); Johns, Forest D., Weehawken New Jersey 07086-6702 (US)
(74) Representative: Müller-Boré & Partner Patentanwälte PartG mbB

(56) References cited:
- WO-A1-02/093920
- US-A1- 2006 075 449
- US-A1- 2007 162 568
- US-A1- 2009 119 722

## Description

### BACKGROUND OF THE INVENTION

### 1. Technical Field.

This disclosure relates to content insertion into digital media streams. In particular, this disclosure relates to providing frame accurate content insertion triggers in digital video streams communicated to downstream endpoints.

### 2. Related Art.

Content providers have long faced the problem that their global programming often includes commercial content not relevant to destination markets. Consider, for example, live broadcast video of a ping pong tournament from South Korea. The original broadcast would typically include commercials in the Korean language and specific to Korean products and services. Although suitable for the primary market in South Korea, those commercials are of little or no value for a secondary market, for example the United States or Brazil. In an age of worldwide satellite and cable distribution of programming, there are enormous possibilities for reaching additional markets, but corresponding challenges in localization.

For this reason, broadcast networks have evolved to include mechanisms for local commercial replacement. The replacement is highly accurate and reliable. In particular, the replacement happens on a "frame accurate" basis, which means that local content providers can insert a replacement commercial starting at any desired frame within the video stream. One way in which frame accurate replacement has been done is to insert special dual tone multifrequency (DTMF) tones in the live content stream (e.g., in a subband in the accompanying audio). Local content providers have the benefit of accurate timecode that accompanies the broadcast, and are able to find the DTMF tones and interpret them as content insertion triggers. Because the timing of playout of content is known down to the frame level, the local content providers can replace commercial content with locally relevant commercials without any degradation to the original broadcast, and do so consistently across all of their subscribers.

At the same time, explosive growth and development in high speed digital communication technologies, coupled with highly efficient encoding, today makes virtually any content available anywhere in the world, given a suitable Internet connection. Timecode, however, is not generally available in digitally encoded video. Instead, digital communication of broadcast video relies on transcoding a linear baseband stream of video and audio into a highly compressed linear stream carried in Internet Protocol (IP) packets. The transcoding process typically introduces a delay because of the processing time necessary to generate the compressed linear stream. The delay varies unpredictably depending on the encoding complexity of each frame of video. Because of the unpredictable delay, IP encoded streams cannot be delivered frame accurately. As a result, local content providers could at best only guess at where in the received digital video stream to insert local replacement commercials. In other words, the local content providers were unable to match, on a frame accurate basis, the replacement triggers specified in the original broadcast video.

A need has long existed to address the problems noted above and others previously experienced.

### SUMMARY

A content insertion system helps locate where, in a digital video stream delivered to an endpoint, custom content should be inserted. Accordingly, as one example, a local media provider may insert into the video stream custom commercials tailored to the specific location served by the local media provider. With frame accuracy, the content insertion system inserts content insertion triggers into the delivered digital video streams. To that end, the system determines the trigger positions at which insertion triggers occur in a source signal (e.g., in a live video broadcast). This determination may proceed with reference, as examples, to timecode accompanying or generated for the source video input. The system then locates the corresponding trigger positions in the output video stream, and inserts corresponding content insertion triggers into the output video stream as the content insertion system communicates the video stream to downstream players.

Other systems, methods, features and advantages will be, or will become, apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

The system may be better understood with reference to the following drawings and description. In the figures, like reference numerals designate corresponding parts throughout the different views.

Figure 1 shows a communication architecture that includes a frame accurate content insertion system.

Figure 2 shows a signal diagram showing the relationship between content triggers in a source signal and content triggers in an output signal.

Figure 3 shows a content insertion system.

Figure 4 shows a content trigger table.

Figure 5 shows a content insertion system.

Figure 6 shows a content insertion system.

Figure 7 shows a flow diagram of time stamp initiator logic that a content insertion system may implement.

Figure 8 shows a flow diagram of commercial spot trigger logic that a content insertion system may implement.

Figure 9 shows a flow diagram of digital content spot insertion logic that a content insertion system may implement.

Figure 10 shows a content insertion system.

### DETAILED DESCRIPTION

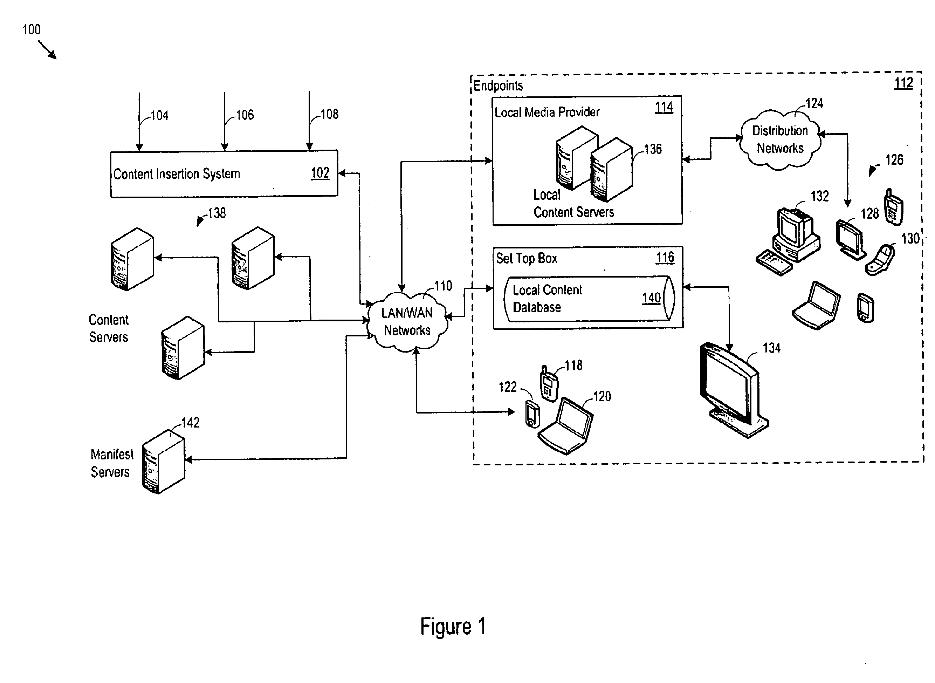

Figure 1 shows a communication architecture 100 that includes a frame accurate content insertion system 102 ("system 102"). The system 102 obtains a source signal from potentially many different input feeds. As examples, the input feeds may include satellite feeds 104, fiber optic input feeds 106, and cable connection feeds 108. The feeds 104-108 deliver, as source signals, live video broadcast signals to the system 102 for processing.

The discussion below makes reference to live broadcast video and replacement commercial content. However, the system 102 may process different types of source signals for different types of content insertion. For example, the system 102 may identify, in general, content insertion triggers in pre-recorded broadcast video for identifying and replacing, on a frame accurate basis, substantive portions of the pre-recorded broadcast video with any desired content. One potential application is to add, remove, or otherwise change specific types of content (e.g., scenes of violence) with more desirable content downstream (e.g., less violent replacement scenes). Besides audio and video, other examples of content that may be inserted into the output signal communicated downstream include banner advertisements, media player control instructions (e.g., an instruction to retrieve and display a banner advertisement specified in the instruction), content identifiers (e.g., movie and actor names) and firmware updates.

The live video broadcast signals include content insertion triggers (e.g., commercial triggers) located at trigger positions typically specified down to the level of a single frame. Thus, the commercial insertion triggers in the source signal specify where, on a frame accurate basis, a downstream player should insert a replacement commercial. The system 102 includes a transcoder that converts the live broadcast video into an output signal having different characteristics than the live broadcast video. For example, the transcoder may be an IP encoder that produces a highly compressed version of the live broadcast signal as a digital output signal. For some output signals (e.g., H.264 or Adobe (TM) Flash (TM) streams), the system 102 locates, in the output signal, output trigger positions that correspond to source signal positions of the source signal content insertion triggers and, at the output trigger positions, inserts output signal content insertion triggers corresponding to the source signal content insertion triggers. For other output signals (e.g., Microsoft (TM) Silverlight (TM) streams), the system 102 may insert content insertion triggers into a manifest file (in whatever form the manifest file syntax specifies) that downstream endpoints access to determine when and where to insert replacement content.

The system 102 communicates the output signal over the Local Area Networks / Wide Area Networks (LAN/WAN) 110 to the endpoints 112. The endpoints 112 may be any of a wide range of devices. As examples, the endpoints 112 may be local media provider 114, set top boxes 116, mobile phones 118, computers 120, and personal data assistants (PDAs) 122.

The local media provider 114 may be a local broadcasting company, an Internet service provider (ISP), or other provider. The local media provider 114 receives the output signal from the system 102 and reacts to the output signal content insertion triggers to insert replacement content on a frame accurate basis. Furthermore, the local media provider 114 may then communicate the resulting video stream (including the replacement content) over the distribution networks 124 to additional endpoints 126. Examples of such additional endpoints 126 include digital or analog televisions 128, smart phones 130, and computers 132. The set top boxes 116 may be, as one example, set top boxes provided by a local cable company to drive content to a television or other display 134.

The output signal from the system 102 need not be processed by a local media provider 114 or set top box 116, however. Instead, any of the endpoints 112, such as the computers 120, may directly receive the output signal. Such endpoints 112 may include media player software (e.g., Abode (TM) Flash player, a Silverlight (TM) player, or an H.264 media player) that receives, decodes, and displays the decoded output signal. The media player software may react to the output signal content insertion triggers by inserting, on a frame accurate basis, replacement content as instructed by the output signal content insertion triggers. Alternatively, the media player software may regularly check a locally or remotely hosted manifest file (e.g., in the case of a Silverlight (TM) player) to determine when to insert replacement content as playback of the received output signal occurs.

Any of the endpoints 112 may obtain the replacement content (e.g., commercial audio and video data) for insertion from a wide range of sources. For example, the local media provider 114 may obtain the replacement content from local content servers 136, remote content servers 138, or from other data sources. As another example, the set top box 116 may include a local content database 140. The local content database 140 may take the form of a hard disk, non-volatile memory, web or browser cookies, or other memory inside the set top box 116 that the cable company programs with pre-determined replacement content. For endpoints that include media players that operate in conjunction with manifest files, the players may obtain the manifest file data from local or remote manifest servers 142, or by receiving manifest file data from the system 102.

The networks 110 and 124 may adhere to a wide variety of network topologies and technologies. For example, the networks 110 and 124 may include Ethernet and Fiber Distributed Data Interconnect (FDDI) packet switched networks communicating Transmission Control Protocol / Internet Protocol (TCP/IP) packets, or any other communication protocol data. Furthermore, the distribution networks 124 may include satellite, cable, or microwave transceivers that broadcast the video stream (including replacement content) in analog or digital form to the additional endpoints 126. Thus, the networks 110 and 124 represent a transport mechanism or interconnection of multiple transport mechanisms for data exchange between the system 102, content servers 138, manifest servers 142, and the endpoints 112.

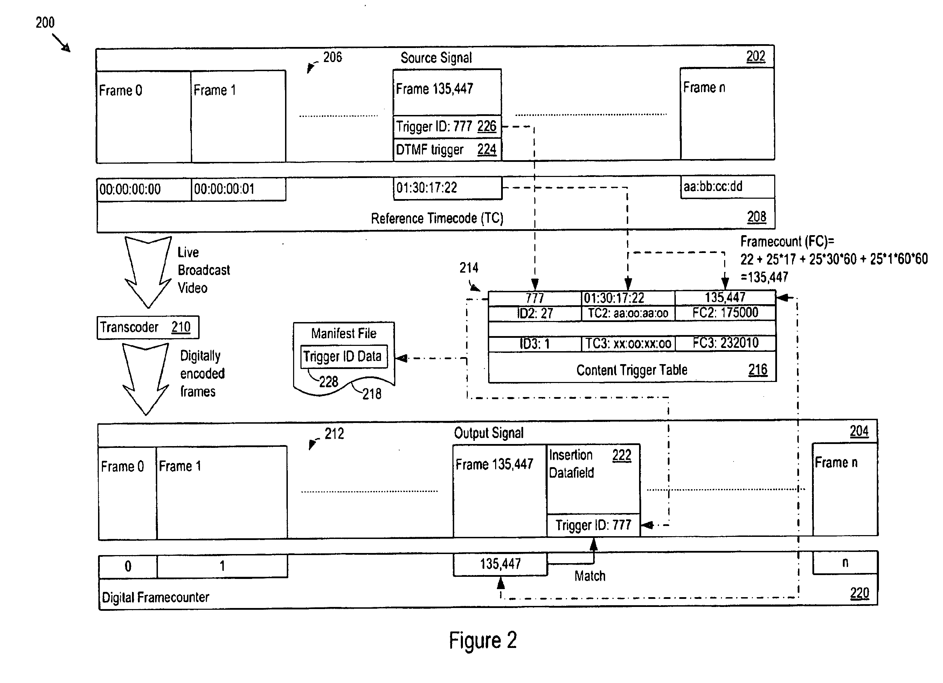

Figure 2 shows a signal diagram 200 that illustrates the relationship between content triggers in a source signal 202 and content triggers in an output signal 204. The source signal 202 arrives as, for example, a live broadcast sequence of analog video frames 206. The reference timecode 208 may be house time code produced by a house timecode generator or may be timecode accompanying the source signal 202 as the source signal 202 is received. A transcoder 210 converts the source signal 202 into a sequence of digital frames 212 that form the output signal 204. Examples of transcoders 210 include IP encoders that generate H.264, Flash (TM), or Silverlight (TM) streams.

The reference timecode 208 specifies, for example, the hour, minute, second, and frame, of each frame 206 in the source signal. Examples of suitable timecode 208 that the system 102 may employ include Society of Motion Picture and Television Engineers (SMPTE) timecodes, such as Vertical Interval TimeCode (VITC) and Linear TimeCode (LTC). The system 102 may work with other timecode formats. The source signal 202 may or may not adhere to a recognized video signal standard, such as the 24 frames per second (FPS) film high definition standard, 25 FPS PAL standard, 29.97 FPS Phase Alternate Line (PAL)-M standard, 25 FPS Séquentiel couleur à mémoire (SECAM) standard, 29.97 FPS National Television System Committee (NTSC) standard, or 30 FPS High Definition Television standard.

In the example shown in Figure 2, the timecode 01:30:17:22 marks frame number 135,447 (22 + 25*17 + 25*60*30 + 25*1*60*60) from the beginning of the source signal, assuming a 25 FPS source signal 202. At frame 135,447, the broadcaster of the source signal 202 has inserted a DTMF source signal content insertion trigger 224, with corresponding trigger identifier 226 (in this instance "777"). Accordingly, the source signal 202 specifies that replacement content should occur starting at frame 135,447. The substance of the replacement content will be the content identified by trigger identifier 777. The trigger identifier 226 may be encoded in the source signal 202, as examples, in the audio or video sections of the source signal 202. The trigger identifier 226 may also be generated, obtained, or specified by the system 102 responsive, for example, to a list of insertion content and trigger positions provided by a third party to the system 102.

Accordingly, the system 102 treats frame 135,447 as a trigger position at which custom content will be inserted. For each trigger position, the system 102 saves the trigger identifier, the timecode, and the framecount in a content trigger entry 214 in the content trigger table 216. The content trigger table 216 may be a data structure in a memory (e.g., in RAM), may be a database table, or may be implemented in other ways. Alternatively or additionally, the system 102 may save, in a local or remote manifest file 218, trigger identification data 228, such as the trigger identifier, the timecode, and the framecount, in whatever format to which the manifest file adheres (e.g., a Silverlight (TM) manifest file). A downstream media player may then access the manifest file 218 to determine when to insert replacement content into the locally displayed video stream.

The transcoder 210 generates digital frames 212 for the output signal 204. As the transcoder 210 generates each frame, the system 102 increments the digital framecounter 220 for the output signal 204. As described in more detail below, the system 102 synchronizes the digital framecounter 220 and the timecode and framecount data for the source signal 202 so that an accurate comparison may be made to find the trigger positions in the output signal 204 that correspond to the trigger positions in the source signal 202.

As the digital framecounter 220 increments, the system 102 compares the framecount stored in the digital framecounter 220 against the content trigger entries 214 in the content trigger table 216. When a match is found (e.g., between the digital framecounter 220 value and the framecount 135,447 in the content trigger table 216), the system 102 inserts an output signal content insertion trigger 222 at the current frame in the output signal 204 (the correct trigger position to maintain frame accuracy with the source signal 202 content triggers). The output signal content insertion trigger 222 may include the trigger identifier obtained from the content trigger table 216, the framecount, and/or any other trigger-characterizing data that the system obtains. The transport mechanism for the output signal content insertion trigger 222 may vary depending on the output signal format. As examples, the transport mechanism may be a predefined data field in an H.264 stream, or the direct insertion of a trigger identifier in a Flash output stream.

Downstream, the endpoints 112 receive the output signal 204. Media players, for example, in the endpoints 112 parse the output signal 204 and find the frame accurate output signal content insertion triggers (e.g., the trigger 222). The endpoints 112 respond to the output signal content insertion triggers by retrieving and inserting the replacement content at exactly the correct frame.

To that end, an endpoint 112 may extract the trigger identifier (e.g., "777") and query a local or remote database, content server 138, or other trigger information source, to determine what replacement content (e.g., what commercial) is associated with the trigger identifier. The database, content server 138, or trigger information source may return, for example, a Uniform Resource Locator (URL) (e.g., a distributed URL link, or a set of the next 5, 10, or other number 'n' of URL links for upcoming replacement content) to the endpoint 112 in response to the query. The endpoint 112 executes a data retrieval operation on the resource link to obtain the replacement insertion data. However, as noted above, the endpoints 112 may obtain the replacement insertion data from local databases, or in other ways.

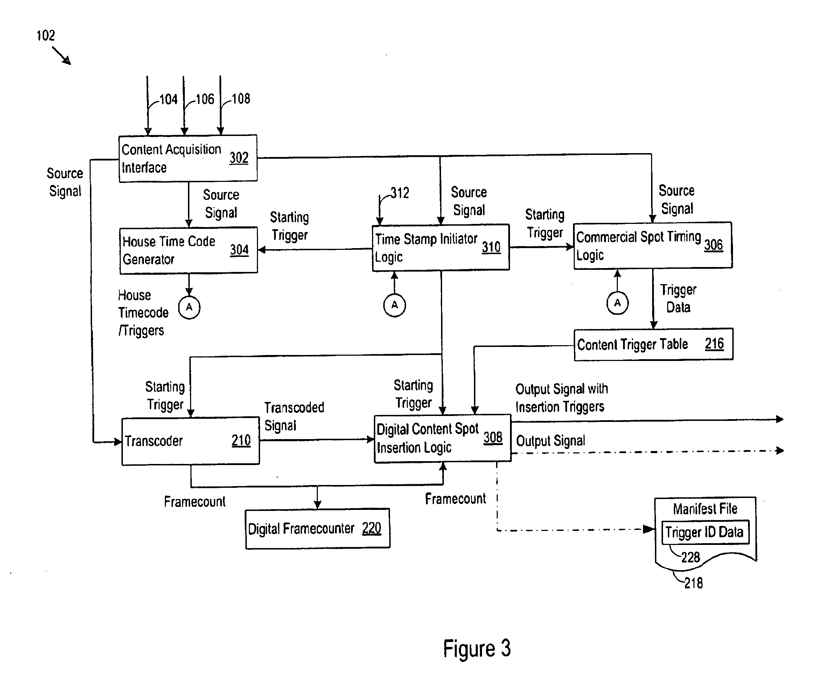

Figure 3 shows an example implementation of the content insertion system 102. A content acquisition interface 302 obtains the source signal 202 from any desired input connection. As examples, the content acquisition interface 302 may include a satellite signal receiver for the satellite feed 104, an optical receiver for the fiber optic input feeds 106, or a Radio Frequency (RF) receiver for the cable connection feeds 108.

A house timecode generator 304 creates internally (with respect to the system 102) synchronized replacement timecode for the source signal. The house timecode generator 304 also serves as a secondary source of timecode when the source signal arrives with timecode already included. Commercially available timecode generators from the Denecke, JVC, Burst, or other companies may implement the house timecode generator 304, as examples.

The system 102 maintains a synchronized system-wide reference for a start time (e.g., zero framecount). In particular, the time stamp initiator logic (TSIL) 310 may issue a starting trigger signal to the components in the system 102. In response to a starting trigger signal, the components reset to a reference time (e.g., framecount 0) and start incrementing framecounts from the reference time. In particular, the TSIL 310 resets the house timecode generator 304 and digital framecounter 220 to the reference time for accurate framecount comparison purposes. The synchronized house timecode may replace the source signal timecode (if any) received with the source signal for the purposes of trigger location and insertion of trigger data into the content trigger table 216.

In some implementations, the TSIL 310 may issue the starting trigger in response to a manual input signal received on a reset input 312 (e.g., a reset switch or touchscreen graphical user interface input). An operator may provide the manual input signal whenever it is desired to reset the system 102 to a common reference time, such as when a live broadcast begins, for example, or according to other criteria. In other implementations, the TSIL 310 analyzes signal content (e.g., to find program codes or other data) in the source signal 202 to automatically determine when to issue the starting trigger signal (e.g., when a program code indicates start of program).

The TSIL 310 analyzes the source signal 202 to identify the source signal content insertion triggers. The source signal content insertion triggers may be DTMF tones, General Purpose Interface (GPI) triggers, or other content insertion triggers located in the source signal 202 according to defined broadcast standards. As it locates content insertion triggers, the TSIL 310 communicates trigger location messages to the commercial spot timing logic (CSTL) 306. The trigger location messages may specify that the TSIL 310 has located a source signal content insertion trigger. The trigger location messages may further specify the trigger identifiers, and trigger positions (e.g., in terms of timecode or framecount) as determined by the TSIL 310.

Alternatively, the CSTL 306 may, in response to the trigger location messages, analyze the source signal 202 and timecode 208 to determine the trigger identifiers and trigger positions. The CSTL 306 populates the content trigger table 216 with the trigger identifier, timecode, and framecount (or any other desired trigger characterizing data). For this purpose, the CSTL 306 may use, as the reference timecode 208, the house timecode that the TSIL 310 synchronized with the starting trigger.

Additionally or alternatively, the house timecode generator 304 may search for and locate indicia that determine where replacement content should be inserted. For example, the house timecode generator 304 may detect black or grey frames and flag those frames for the TSIL 310 or CSTL 306 as trigger positions in the source signal 202. The system 102 may employ the house timecode generator 304 to flag trigger positions when, for example, any portion of the source signal 202 does not include explicit content insertion triggers.

From the source signal 202, the transcoder 210 generates a transcoded signal that includes digital output frames corresponding to the input frames in the source signal 202. The transcoder 210 may be an IP encoder available from Inlet Technologies, Digital Rapids, Axis, or American Dynamics, as examples. The digital content spot insertion logic (CSIL) 308 or the transcoder 210 increments the digital framecounter 220 with each new digital output frame generated by the transcoder 210. The CSIL 308 compares the framecount in the digital framecounter 222 against the content trigger entries 214 (e.g., against the framecounts) in the content trigger table 216 to find matches. The matches may indicate the frame accurate position at which an output signal content insertion trigger should be inserted so that replacement content will be inserted at the correct position in the output signal 204. The matches may also indicate when trigger identification data 228 (e.g., trigger identifiers, timecode, and framecounts) should be written to the manifest file 218. Thus, by finding a framecount match, the CSIL 308 locates in the output signal 204 the correct trigger position. The CSIL 308 may then insert into the output signal 204 an output signal content insertion trigger (e.g., specifying the trigger identifier in a pre-defined data field for insertions defined by the H.264 standard). In addition, the CSIL may add corresponding trigger identification data 228 into the manifest file 218.

The CSIL 308 may delay the output signal 204. In particular, the CSIL 308 may introduce a delay in the output signal 204 to accommodate for the processing time to increment and read the digital framecounter 220, search for matches in the content trigger table 216, insert output signal content insertion triggers, insert data into the manifest file 218, and take other processing steps for frame accurately preparing the output signal. These processing steps should occur prior to the frame corresponding to the desired trigger location passing out of the system 102 as part of the output signal 204. In some instances, the output signal delay may be on the order of 10 to 15 seconds. However, the system 102 may set the CSIL 308 to use whatever delay, regardless of how long or how short, will allow the framecount matching and content trigger insertion to execute without missing frames in the output signal that correspond to trigger positions.

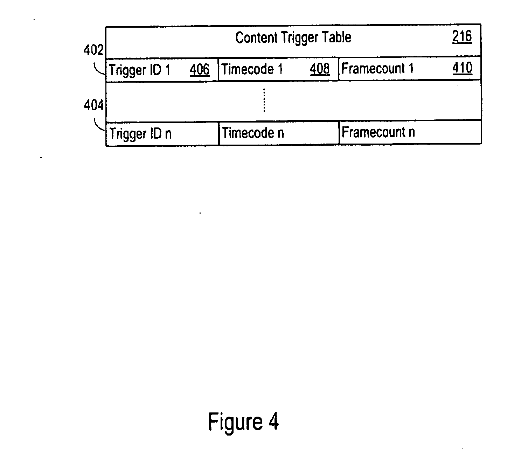

Figure 4 shows an example implementation of the content trigger table 216. In the example shown, the content trigger table includes any number of rows of content trigger entries (e.g., the content trigger entries 402 and 404). Each content trigger entry may include a trigger identifier 406, a timecode 408 at which the system 102 found a content insertion trigger corresponding to the trigger identifier 406, and a framecount 410 giving the number of frames (e.g., from the beginning of the source signal) at which the system 102 found the insertion trigger. Other implementations of the content trigger table 216 may include additional, less, or different content trigger identifying data. Furthermore, the system 102 may save any or all of the content trigger table 216 as a record against which content insertion may be verified, e.g., to ensure that all of the specified trigger locations were found and communicated to the downstream endpoints.

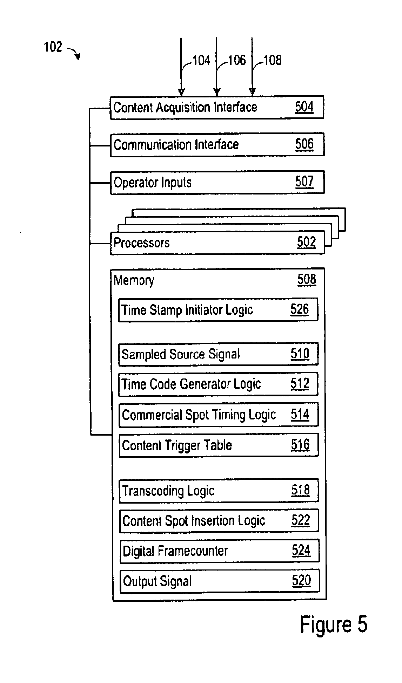

Figure 5 shows another example implementation of a content insertion system 102. In the example in Figure 5, digital signal processors 502 connect to a content acquisition interface 504, a communication interface 506, operator inputs 507 and a memory 508. The content acquisition interface 504 may include analog to digital converters, for example, for generating a digitally sampled rendition of the source signal 510 in the memory 508. The time code generator logic 512 may then be implemented as processor executable instruction that output timecode frame by frame responsive to the sampled source signal 510. Similarly, the commercial spot timing logic 514 may be implemented as processor executable instructions that analyze the sampled source signal 510 to find the source signal content insertion triggers and trigger positions, and to store the content trigger entries in the content trigger table 516.

The time stamp initiator logic 526 may respond to the operator inputs 507 (e.g., to button inputs or touchscreen input) and responsively output the starting trigger to the other logic in the memory 508. Alternatively or additionally, the time stamp initiator logic 526 may analyze the sampled source signal 510 for indicia on which to automatically generate the starting trigger.

The transcoding logic 518 may be a software IP encoder, for example, that generates the digital frames of the output signal 520, given the sampled source signal 510. The content spot insertion logic 522 includes instructions that compare the framecount stored in the digital framecounter 524 against the content trigger table 516. Either the transcoding logic 518 or the content spot insertion logic 522 may increment the digital framecounter 524 as new frames for the output signal 520 are generated. When the content spot insertion logic 522 finds a match, it inserts into the output signal 520 an output signal content insertion trigger, for example by specifying the trigger identifier in a Flash video output stream.

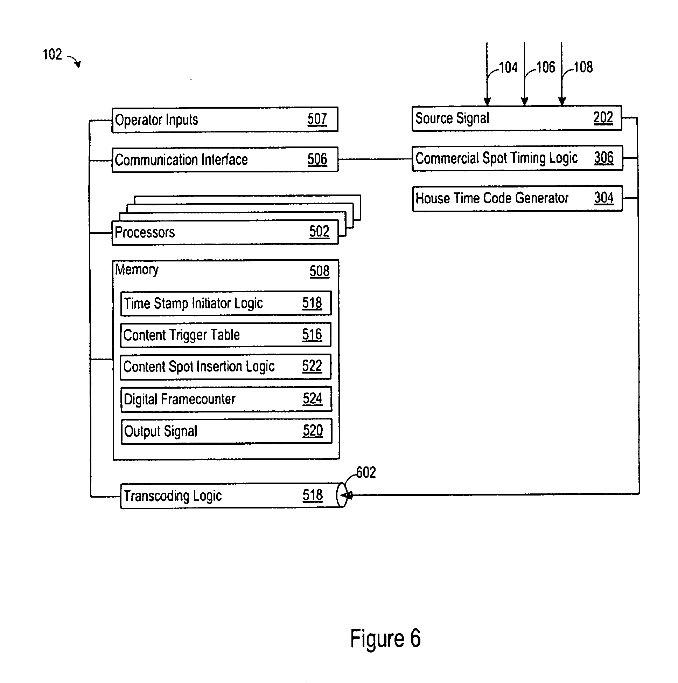

Figure 6 shows another example implementation of the content insertion system 102. In Figure 6, the source signal 202 is processed by separate hardware or software modules for the CSTL 306, and a separate house timing code generator 304 provides timecode for the source signal. The CSTL 306 communicates content trigger entries for storage in the content trigger table 516 through the communication interface 506, by direct memory access, or other technique. To that end, the communication interface 506 may be a message passing interface, a remote procedure call interface, an application programming interface, or other communication interface. In addition, the source signal 202 channels into the transcoding logic 518 through an analog front end including an analog signal input 602. The transcoding logic 518 may then save digital output frames in the memory 508 to build the output signal 520.

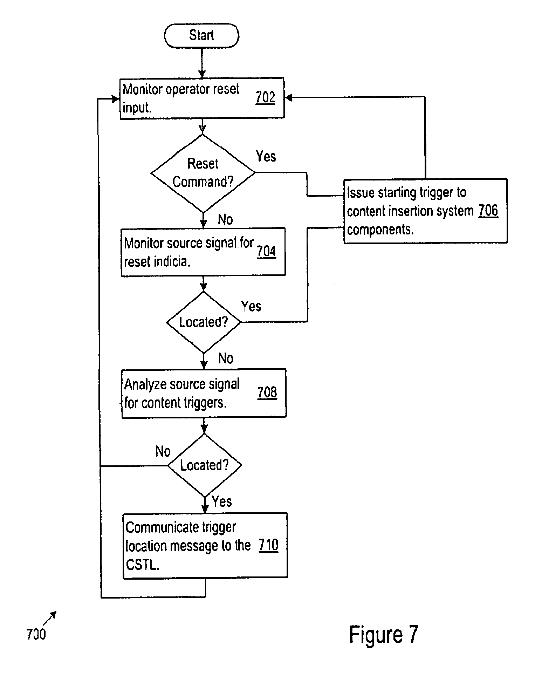

Figure 7 shows a flow diagram of logic 700 for the time stamp initiator logic 310 or 526, as examples. The logic 700 monitors an operator input (e.g., input 312 or input 507) for a manual reset signal (702). The logic 700 may also monitor the source signal for reset indicia (e.g., a start of program code) (704). If either condition is met, the logic 700 issues a starting trigger to the system components (706). For example, the logic 700 may issue the starting trigger to the house time code generator 304, CSTL 306, CSIL 308, and transcoder 210.

In addition, the logic 700 may analyze the source signal for content insertion triggers (708). As it locates the source signal content insertion triggers, the logic 700 communicates trigger location messages to the CSTL 306 (710). The trigger location messages may include trigger characterizing data, such as trigger identifiers and trigger positions. The trigger positions may be expressed in terms of framecount at which the content insertion triggers were located, timecode at which the content insertion triggers were located, or both. Alternatively, the CSTL 306 may analyze the source signal 202 to find the trigger characterizing data in response to the trigger location messages.

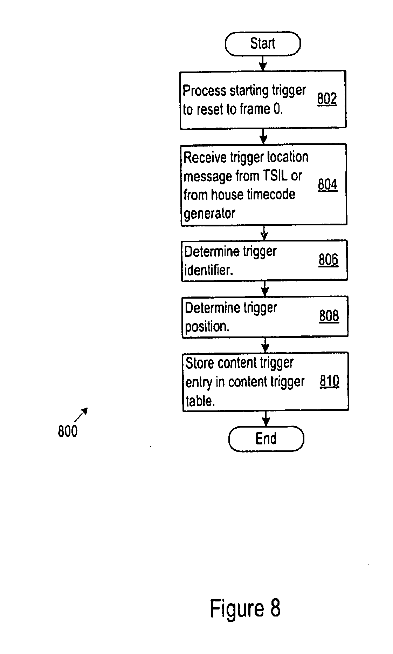

Figure 8 shows a flow diagram of logic 800 for the CSTL 306 or 514, as examples. The logic 800 processes a starting trigger generated by the TSIL 310 to reset a local framecounter to a common reference time (e.g., to reset to framecount zero) (802). The logic 800 receives trigger location messages from the logic 700, from the house timecode generator 304, or other sources (804). The trigger location messages may specify that a content insertion trigger is found at the current source signal frame, but may also specify trigger identifiers, framecount at which the content insertion triggers were located, and timecode at which the content insertion triggers were located, or other trigger characterizing information.

Either from the trigger location messages, or by analyzing the source signal 202, the logic 800 may determine the trigger identifiers (806) and the trigger positions (808). With regard to the trigger positions, the logic 800 may obtain the timecode from the trigger insertion message or directly from the house timecode, as examples. With regard to the framecount stored in the content trigger table 216, the logic 800 may compute the framecount from the timecode, may increment the local framecounter by the timecode received from the TSIL 310 (or determined from the source signal 202) when a new trigger is found, or may determine or obtain the framecount in other ways or from other sources. Given the trigger identifiers and trigger positions, the logic 800 stores content trigger entries in the content trigger table (810).

In other implementations, the logic 700 (e.g., for the TSIL 310) handles the starting triggers, while the logic 800 (e.g., for the CSTL 306) searches the source signal 202 for content insertion triggers, trigger identifiers, trigger positions, and stores the trigger data in the content trigger table.

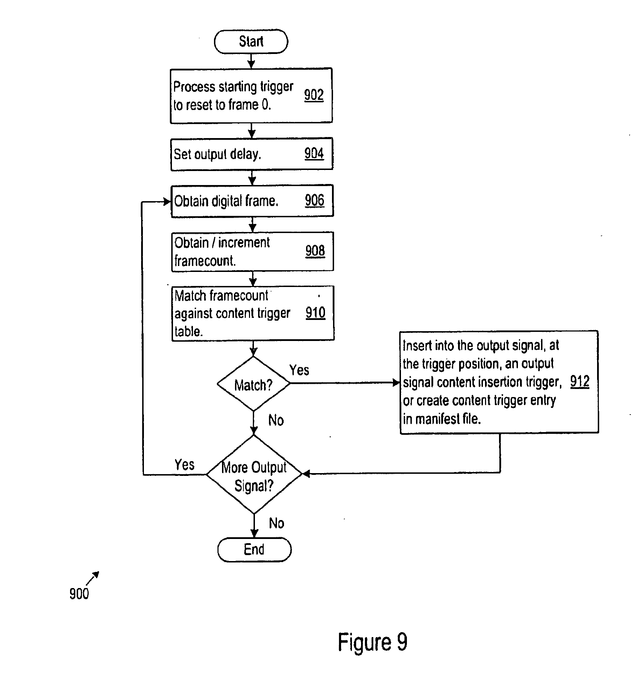

Figure 9 shows a flow diagram of logic 900 for the CSIL 308 or 522, as examples. The logic 900 processes a starting trigger generated by the TSIL 310 to reset the framecount in the digital framecounter 220 to a reference time (e.g., to framecount zero) (902). The logic 900 also sets the output delay (904) for the output signal 204 to accommodate the processing delays associated with tracking framecount, matching against the content trigger table 216, inserting output signal content insertion triggers, and taking other processing actions.

The logic 900 receives digital frames from the transcoder 210 (906) and may increment the digital framecounter 220 with each received frame (908). Alternatively, the logic 900 may obtain the framecount from another source, or may allow the transcoder 210 to increment the framecounter 220 as the transcoder produces digital frames for the output signal 204.

As the digital framecounter 220 increments, the logic 900 compares the framecount against the content trigger table 216. More specifically, the logic 900 attempts to find framecount matches between the digital framecounter 220 and the framecount entries in the content trigger table 216. A match successfully locates, in the output signal 204, the trigger position where replacement content should appear. Accordingly, when the logic 900 finds a match, the logic 900 inserts into the output signal 204 (at the trigger position) an output signal content insertion trigger, or saves a corresponding content trigger entry in a manifest file (912).

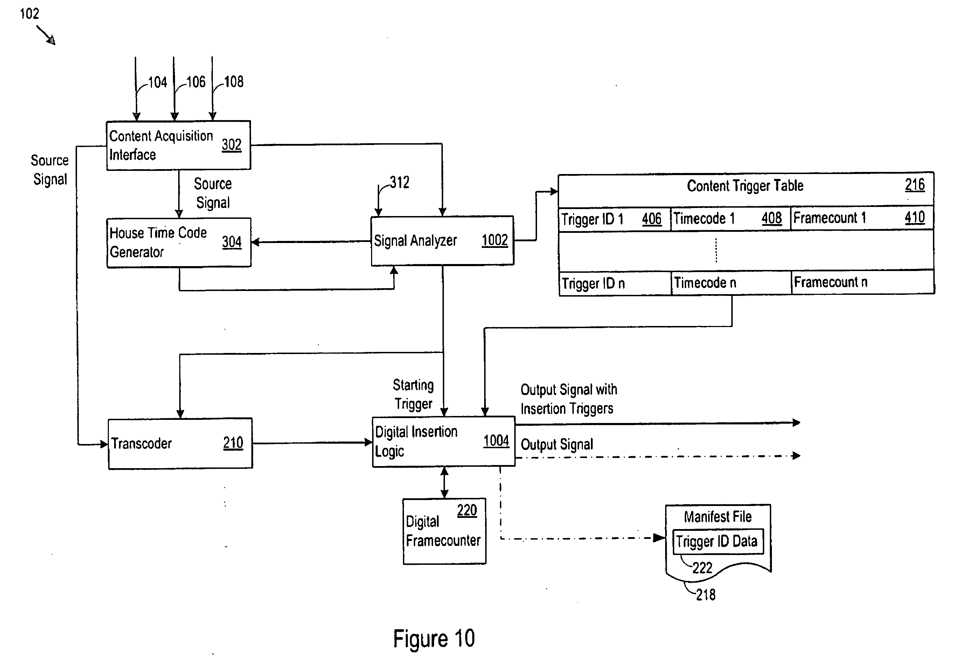

Figure 10 shows another example of a content insertion system 102. In the example shown in Figure 10, much of the functionality described above is largely divided between a signal analyzer 1002 and digital insertion logic 1004. In particular, the signal analyzer 1002 may include logic, whether in hardware, software, or both, that analyzes the source signal 202 to find the source signal content insertion triggers. The signal analyzer 1002 also determines the trigger position in the source signal where the source signal content insertion trigger is located, as well as the trigger identifier, or other trigger characterizing information. The signal analyzer 1002 stores corresponding content trigger entries in the content trigger table 216. Furthermore, the signal analyzer 1002 may provide a starting trigger for the rest of the system 102 to reset the system 102 to a common reference time (e.g., frame 0 for the purposes of internal counting).

The digital insertion logic 1004 may include logic, whether in hardware, software, or both, that receives digital video frames from the transcoder 210. The digital video frames form the output signal 204, and the digital insertion logic 1004 may maintain a count of the video frames in the digital framecounter 220. The digital insertion logic 1004 matches the framecount in the digital framecounter 220 against the trigger position information in the content trigger table 216. When a match is found, the digital insertion logic 1004 has located a correct trigger position in the output signal. The digital insertion logic 1004 then creates an output signal content insertion record that is frame accurate with respect to the source signal content insertion trigger. In one form, the output signal content insertion record is an insertion into the output signal, at the trigger position, of an output signal content insertion trigger. An example of an output signal content insertion trigger is a trigger identifier from the content trigger table 216 inserted into a predefined data field in an H.264 stream. In another form, the output signal content insertion record is a manifest file entry stored in a manifest file that will be read and processed by a downstream player of the output signal 204. The manifest file entry may specify trigger characterizing information, including trigger identifiers and trigger position.

The system 102 implements technical solutions to the technical problem of frame accurate content insertion in digital media streams. The technical solutions include having the system 102 use a source signal (e.g., a live broadcast stream signal) prior to digital encoding to drive insertion of content triggers into the output signal post-encoding. Another technical solution is having the system 102 match digital framecount post-encode with framecount obtained from the timecode of the source signal pre-encode. Another technical solution is issuing a starting trigger synchronization signal to the system components to keep the source signal processing components (e.g., the house timecode generator 304, TSIL 310, and CSTL 306) synchronized with the digital output signal processing components (e.g., the transcoder 210 and CSIL 308).

The content triggers in the output signal 204 are frame accurate with respect to the corresponding content triggers in the source signal. As a result, each of the endpoints that receives the output signal may frame-accurately insert replacement content, and every endpoint may display such replacement content at the correct and identical frame time. The endpoints 112 redirect a media player to replacement content on a frame accurate basis, and then redirect the media player back to the original video stream when all the replacement content has played, or the replacement content insertion time has ended.

In general, the logic and processing described above may be encoded or stored in a machine-readable or computer-readable medium such as a compact disc read only memory (CDROM), magnetic or optical disk, flash memory, random access memory (RAM) or read only memory (ROM), erasable programmable read only memory (EPROM) or other machine-readable medium as, for examples, instructions for execution by a processor, controller, or other processing device. The medium may be implemented as any device or tangible component that contains, stores, communicates, propagates, or transports executable instructions for use by or in connection with an instruction executable system, apparatus, or device. Alternatively or additionally, the logic may be implemented as analog or digital logic using hardware, such as one or more integrated circuits, or one or more processors executing instructions that perform the processing described above, or in software in an application programming interface (API) or in a Dynamic Link Library (DLL), functions available in a shared memory or defined as local or remote procedure calls, or as a combination of hardware and software. As examples, the transcoder 210, framecounter 220, TSIL 310, CSTL 306, or CSIL 308 may be implemented in software, hardware, or both. The logic may be functionally partitioned to meet to goals of any specific implementation. For example, the TSIL 310 and CSTL 306 may be separate processing systems or individual programs, or may be integrated into a single processing system or program. Communication between the components in the system 102 may be RS-422 communication, or adhere to other types of communication protocols. For example, the TSIL 310 may exchange trigger location information with the CSTL 306 via the RS-422 protocol.

The systems may include additional or different logic and may be implemented in many different ways. A processor may be implemented as a controller, microprocessor, digital signal processor, microcontroller, application specific integrated circuit (ASIC), discrete logic, or a combination of other types of circuits or logic. Similarly, memories may be Dynamic Random Access Memory (DRAM), Static Random Access Memory (SRAM), Flash, or other types of memory. Parameters (e.g., conditions and thresholds) and other data structures may be separately stored and managed, may be incorporated into a single memory or database, or may be logically and physically organized in many different ways. Programs and instructions may be parts of a single program, separate programs, implemented in libraries such as Dynamic Link Libraries (DLLs), or distributed across several memories, processors, cards, and systems.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. A method comprising:
locating, in a source signal (202), a source signal content insertion trigger, the source signal being a video signal;
determining a trigger position in the source signal where the source signal content insertion trigger is located, the trigger position being specified by a single frame, the determining of the trigger position comprising obtaining a framecount for the source signal that identifies the trigger position;
transcoding the source signal to obtain an output signal (204), the output signal being a digital signal;
locating, in the output signal, the trigger position, the locating of the trigger position comprising:
keeping a framecount of frames output during transcoding; and
matching the framecount of frames output during transcoding to the trigger position identified by the framecount for the source signal; and
inserting into the output signal, at the trigger position, an output signal content insertion trigger.

2. The method of claim 1, wherein locating a source signal content insertion trigger comprises:
locating, in the source signal, any combination of a dual to multifrequency (DTMF) content insertion signal and a General Purpose Interface (GPI) content insertion signal.

3. The method of claim 1 or 2, wherein determining a trigger position in the source signal comprises:
obtaining a timecode for the source signal that identifies the trigger position.

4. The method of any of the preceding claims, further comprising:
issuing a starting trigger signal to synchronize determining the trigger position in the source signal and the trigger position in the output signal.

5. The method of any of the preceding claims, wherein transcoding comprises:
Internet Protocol encoding the source signal to obtain the output signal.

6. The method of any of the preceding claims, further comprising:
determining a trigger identifier for the source signal content insertion trigger, the trigger identifier specifying replacement content for the output signal, and/or
wherein inserting an output signal content insertion trigger comprises inserting the trigger identifier into the output signal at the trigger position.

7. The method of claim 6, further comprising:
storing the trigger identifier and the trigger position in a content trigger table;
wherein matching the framecount to the trigger position comprises comparing the framecount against the trigger position in the content trigger table.

8. A content insertion system comprising:
a content acquisition interface that obtains a source signal (202) being a video signal;
a signal analyzer in communication with the content acquisition interface, the signal analyzer configured to:
locate, in the source signal, a source signal content insertion trigger; and
determine a trigger position in the source signal where the source signal content insertion trigger is located, the trigger position being specified by a single frame, the determination of the trigger position comprising obtaining a framecount for the source signal that identifies the trigger position;
a transcoder in communication with the content acquisition interface that produces an output signal (204) from the source signal, the output signal being a digital signal; and
digital insertion logic in communication with the transcoder and signal analyzer, the digital insertion logic configured to:
locate, in the output signal, the trigger position; and
create an output signal content insertion record that is frame accurate with respect to the source signal content insertion trigger,
wherein the digital insertion logic comprises:
a digital framecounter comprising a framecount of frames generated by the transcoder for the output signal; and
comparison logic that compares the framecount of frames generated for the output signal to the trigger position identified by the framecount for the source signal.

9. The content insertion system of claim 8, wherein:
the transcoder comprises an Internet Protocol encoder.

10. The content insertion system of claim 8, where the trigger position comprises a framecount within the source signal.

11. The content insertion system of any one of claims 8 to 10, where the signal analyzer is further configured to:
synchronize the signal analyzer and the digital insertion logic to a reference start time.

12. The content insertion system of any one of claims 8 to 11, further comprising:
a content trigger table that stores the trigger position;
wherein the digital insertion logic is configured to locate the trigger position by comparing the framecount in the digital framecounter against the trigger position in the content trigger table.

13. The content insertion system of any one of claims 8 to 12, wherein the output signal content insertion record comprises a manifest file entry;
wherein the output signal content insertion record preferably comprises an insertion into the output signal.

14. The content insertion system of any one of claims 8 to 13, further comprising a house timecode generator comprising a house timecode output that the signal analyzer employs to determine the trigger position.

## Patentansprüche

1. Ein Verfahren, das Folgendes umfasst:
lokalisieren, in einem Quellensignal (202), eines Quellensignal-Inhaltseinfügungs-Trigger, wobei das Quellensignal ein Videosignal ist;
bestimmen einer Triggerposition in Quellensignal, wo sich der Quellensignal-Inhaltseinfügungs-Trigger befindet, wobei die Triggerposition durch ein einzelnes Bild angegeben wird, wobei das Bestimmen der Triggerposition es umfasst, einen Zählwert der Einzelbilder für das Quellensignal zu erhalten, der die Triggerposition identifiziert;
transcodieren des Quellensignals, zum Erhalt eines Ausgangssignals (204), wobei das Ausgangssignal ein digitales Signal ist;
lokalisieren, im Ausgangssignal, der Triggerposition, wobei das Lokalisieren der Triggerposition Folgendes umfasst:
führen eines Einzelbilder-Zählwerts der Einzelbilder, die während des Transcodierens ausgegeben werden; und
zuordnen des Einzelbilder-Zählwerts der Einzelbilder, die während des Transcodierens ausgegeben werden, zu der Triggerposition, die durch den Einzelbilder-Zählwert für das Quellensignal identifiziert wird; und
einfügen eines Ausgangssignal-Inhaltseinfügungs-Triggers in das Ausgangssignal, an der Triggerposition.

2. Das Verfahren nach Anspruch 1, wobei das Lokalisieren eines Quellensignal-Inhaltseinfügungs-Triggers Folgendes umfasst:
lokalisieren im Quellensignal einer beliebigen Kombination aus einem Zweiton-Mehrfrequenz (DTMF)-Inhaltseinfügungssignal und eines Mehrzweck-Schnittstellen (GPI)-Inhaltseinfügungssignals.

3. Das Verfahren nach Anspruch 1 oder 2 wobei das Bestimmen einer Triggerposition im Quellensignal Folgendes umfasst:
erhalten eines Zeitcodes für das Quellensignal, der die Triggerposition identifiziert.

4. Das Verfahren nach irgendeinem der vorhergehenden Ansprüche, das des Weiteren Folgendes umfasst:
ausgeben eines Start-Triggersignals, um die Bestimmung der Triggerposition im Quellensignal und der Triggerposition im Ausgangssignal zu synchronisieren.

5. Das Verfahren nach irgendeinem der vorhergehenden Ansprüche, wobei das Transcodieren Folgendes umfasst:
codieren des Quellensignals nach dem Internet Protokoll zum Erhalt des Ausgangssignals.

6. Das Verfahren nach irgendeinem der vorhergehenden Ansprüche, das des Weiteren Folgendes umfasst:
bestimmen eines Trigger-Identifikators für den Quellensignal-Inhaltseinfügungs-Trigger, wobei der Trigger-Identifikator Ersatzinhalt für das Ausgangssignal spezifiziert, und/oder
wobei das Einfügen eines Ausgangssignal-Inhaltseinfügungs-Triggers das Einfügen des Trigger-Identifikators in das Ausgangssignal an der Triggerposition umfasst.

7. Das Verfahren nach Anspruch 6, das des Weiteren Folgendes umfasst:
speichern des Trigger-Identifikators und der Triggerposition in einer Inhaltstrigger-Tabelle;
wobei das Zuordnen des Einzelbilder-Zählwerts zur Triggerposition das Vergleichen des Einzelbilder-Zählwerts mit der Triggerposition in der Inhaltstrigger-Tabelle umfasst.

8. Ein Inhalt-Einfügesystem, das Folgendes umfasst:
eine Inhaltserwerb-Schnittstelle, die ein Quellensignal (202) erhält, das ein Videosignal ist;
ein Signalanalysator, der mit der Inhaltserwerb-Schnittstelle in Kommunikation steht, wobei der Signalanalysator zu Folgendem konfiguriert ist:
lokalisieren, im Quellensignal, eines Quellensignal-Inhaltseinfügungs-Trigger; und
bestimmen einer Triggerposition in Quellensignal, wo sich der Quellensignal-Inhaltseinfügungs-Trigger befindet, wobei die Triggerposition durch ein Einzelbild angegeben wird, wobei das Bestimmen der Triggerposition es umfasst, einen Zählwert der Einzelbilder für das Quellensignal zu erhalten, der die Triggerposition identifiziert;
einen Transcodierer, der mit der Inhaltserwerb-Schnittstelle in Verbindung steht, der aus dem Quellensignal ein Ausgangssignal (204) erzeugt, wobei das Ausgangssignal ein digitales Signal ist; und
eine digitale Einfügelogik, die mit dem Transcodierer und dem Signalanalysator in Verbindung steht, wobei die digitale Einfügelogik zu Folgendem konfiguriert ist:
lokalisieren, im Ausgangssignal, der Triggerposition; und
erzeugen einer Ausgangssignal-Inhaltseinfügeaufnahme, die bezüglich des Quellensignal-Inhaltseinfügungs-Triggers einzelbildgenau ist wobei die digitale Einfügelogik Folgendes umfasst:
ein digitales Einzelbild-Zählwerk, das einen Einzelbilder-Zählwert der Einzelbilder umfasst, die durch den Transcodierer für das Ausgangssignal erzeugt worden sind; und
eine Vergleichslogik, das den Einzelbilder-Zählwert der Einzelbilder, die für das Ausgangssignal erzeugt worden sind, mit der Triggerposition vergleicht, die durch den Einzelbilder-Zählwert für das Quellensignal identifiziert wird.

9. Das Inhalt-Einfügesystem nach Anspruch 8, wobei der Transcodierer eine Internet Protokoll-Codiereinrichtung umfasst.

10. Das Inhalt-Einfügesystem nach Anspruch 8, wobei die Triggerposition einen Einzelbilder-Zählwert innerhalb des Quellensignals umfasst.

11. Das Inhalt-Einfügesystem nach irgendeinem der Ansprüche von 8 bis 10, wobei der Signalanalysator des Weiteren zu Folgendem konfiguriert ist:
synchronisieren des Signalanalysators und der digitalen Einfügelogik auf eine Referenz-Startzeit.

12. Das Inhalt-Einfügesystem nach irgendeinem der Ansprüche von 8 bis 11, das des Weiteren Folgendes umfasst:
eine Inhaltstrigger-Tabelle, die die Triggerposition speichert;
wobei die digitale Einfügelogik dazu konfiguriert ist, die Triggerposition zu lokalisieren, indem der Einzelbilder-Zählwert im digitalen Einzelbilder-Zählwerk mit der Triggerposition in der Inhaltstrigger-Tabelle verglichen wird.

13. Das Inhalt-Einfügesystem nach irgendeinem der Ansprüche von 8 bis 12, wobei die Ausgangssignal-Inhaltseinfügeaufnahme einen Manifest-Datei-Eintrag umfasst;
wobei die Ausgangssignal-Inhaltseinfügeaufnahme vorzugsweise eine Einfügung in das Ausgangssignal umfasst.

14. Das Inhalt-Einfügesystem nach irgendeinem der Ansprüche von 8 bis 13, das des Weiteren einen house-Zeitcode-Generator umfasst, der eine *house-*Zeitcode-Ausgabe umfasst, die der Signalanalysator verwendet, um die Triggerposition zu bestimmen.

## Revendications

1. Un procédé comprenant le fait de :
localiser, dans un signal de source (202), un déclencheur d'insertion de contenu de signal de source, le signal de source étant un signal vidéo ;
déterminer une position de déclencheur dans le signal de source, où se trouve le déclencheur d'insertion de contenu de signal de source, la position de déclencheur étant spécifiée par une seule image, la détermination de la position de déclencheur comprenant le fait d'obtenir un relevé de nombre d'images pour le signal de source identifiant la position de déclencheur ;
transcoder le signal de source pour obtenir un signal de sortie (204), le signal de sortie étant un signal numérique ;
localiser, dans le signal de sortie, la position de déclencheur, le fait de localiser la position de déclencheur comprenant le fait de :
tenir un relevé d'un nombre d'images des images sorties pendant le transcodage ; et
faire correspondre le relevé de nombre d'images sorties pendant le transcodage à la position de déclencheur identifiée par le relevé de nombre d'images pour le signal de source ; et
insérer dans le signal de sortie, à la position du déclencheur, un déclencheur d'insertion de contenu de signal de sortie.

2. Le procédé d'après la revendication 1, sachant que le fait de localiser un déclencheur d'insertion de contenu de signal de source comprend le fait de :
localiser, dans le signal de source, toute combinaison d'un signal d'insertion de contenu double tonalité multi-fréquence (DTMF) et d'un signal d'insertion de contenu d'interface universelle (GPI).

3. Le procédé d'après la revendication 1 ou 2, sachant que le fait de déterminer une position de déclencheur dans le signal de source comprend le fait de:
obtenir un code temporel pour le signal de source identifiant la position de déclencheur.

4. Le procédé d'après une des revendications précédentes, comprenant en outre le fait de :
émettre un début de déclenchement de signal (*starting trigger signal*) pour synchroniser la détermination de la position de déclencheur dans le signal de source et de la position de déclencheur dans le signal de sortie.

5. Le procédé d'après une des revendications précédentes, sachant que le transcodage comprend le fait de :
encoder en Protocole Internet le signal de source pour obtenir le signal de sortie.

6. Le procédé d'après une des revendications précédentes, comprenant en outre le fait de :
déterminer un identificateur de déclencheur pour le déclencheur d'insertion de contenu de signal de source, l'identificateur de déclencheur spécifiant un contenu de remplacement pour le signal de sortie, et/ou
sachant que le fait d'insérer un déclencheur d'insertion de contenu de signal de sortie comprend le fait d'insérer l'identificateur de déclencheur dans le signal de sortie à la position de déclencheur.

7. Le procédé d'après la revendication 6, comprenant en outre le fait de :
stocker l'identificateur de déclencheur et la position de déclencheur dans un tableau de déclenchement de contenu ;
sachant que le fait de faire correspondre le relevé de nombre d'images à la position de déclencheur comprend le fait de comparer le relevé de nombre d'images avec la position de déclencheur dans le tableau de déclenchement de contenu.

8. Un système d'insertion de contenu comprenant :
une interface d'acquisition de contenu qui obtient un signal de source (202) étant un signal vidéo ;
un analyseur de signaux en communication avec l'interface d'acquisition de contenu, l'analyseur de signaux étant configuré pour
localiser, dans le signal de source, un déclencheur d'insertion de contenu de signal de source ; et
déterminer une position de déclencheur dans le signal de source, où se trouve le déclencheur d'insertion de contenu de signal de source, la position de déclencheur étant spécifiée par une seule image, la détermination de la position de déclencheur comprenant le fait d'obtenir un relevé de nombre d'images pour le signal de source identifiant la position de déclencheur ;
un transcodeur en communication avec l'interface d'acquisition de contenu produisant un signal de sortie (204) à partir du signal de source, le signal de sortie étant un signal numérique ; et
une logique d'insertion numérique en communication avec le transcodeur et l'analyseur de signaux, la logique d'insertion numérique étant configurée pour :
localiser, dans le signal de sortie, la position de déclencheur ; et
créer un enregistrement d'insertion de contenu de signal de sortie avec précision au niveau de l'image par rapport au déclencheur d'insertion de contenu de signal de source,
sachant que la logique d'insertion numérique comprend :
un releveur numérique de nombre d'images comprenant un relevé de nombre d'images pour des images générées par le transcodeur pour le signal de sortie ; et
une logique de comparaison faisant la comparaison entre le relevé de nombre d'images pour des images générées pour le signal de sortie, et la position de déclencheur identifiée par le relevé de nombre d'images pour le signal de source.

9. Le système d'insertion de contenu d'après la revendication 8, sachant que :
le transcodeur comprend un encodeur en Protocole Internet.

10. Le système d'insertion de contenu d'après la revendication 8, sachant que la position de déclencheur comprend un relevé de nombre d'images à l'intérieur du signal de source.

11. Le système d'insertion de contenu d'après une des revendications de 8 à 10, sachant que l'analyseur de signaux est en outre configuré pour :
synchroniser l'analyseur de signaux et la logique d'insertion numérique sur un temps de départ de référence.

12. Le système d'insertion de contenu d'après une des revendications de 8 à 11, comprenant en outre :
un tableau de déclenchement de contenu stockant la position de déclencheur ;
sachant que la logique d'insertion numérique est configurée pour localiser la position de déclencheur en comparant le relevé de nombre d'images dans le releveur numérique de nombre d'images avec la position de déclencheur dans le tableau de déclenchement de contenu.

13. Le système d'insertion de contenu d'après une des revendications de 8 à 12, sachant que l'enregistrement d'insertion de contenu de signal de sortie comprend une entrée de fichier manifeste ;
sachant que l'enregistrement d'insertion de contenu de signal de sortie comprend préférablement une insertion dans le signal de sortie.

14. Le système d'insertion de contenu d'après une des revendications de 8 à 13, comprenant en outre un générateur de code temporel maison (*house timecode*) comprenant une sortie de code temporel maison, que l'analyseur de signaux utilise pour déterminer la position de déclencheur.
